# EUROPEAN PATENT APPLICATION

(11) **EP 3 666 085 A1**
(43) Date of publication of application: **17.06.2020**
(21) Application number: 19215660.2
(22) Date of filing: 12.12.2019
(51) Int. Cl.: A23G 9/22, A23G 9/28, A23G 9/50, A23G 3/34, A21D 13/33

(54) **APPARATUS FOR DECORATING ICE-CREAM CONES**

(30) Priority: 14.12.2018 IT 201800011109
(71) Applicant: Xlogic S.r.l., 20135 Milano (IT)
(72) Inventor: SANTINI, Luciano Paolo, 50022 GREVE IN CHIANTI (IT); IURATO, Giovanni, 20141 MILANO (IT)
(74) Representative: Mittler, Andrea

(57) **Abstract**

An apparatus for decorating ice-cream cones (2) is described; the apparatus comprises a printing device (50) of images by means of food coloring and gripping means (10) adapted to grip a single ice-cream cone, to arrange it under the printing nozzles (51) of the printing device and to rotate it so that the rotation of the single ice-cream cone is synchronized with the printing operation of said printing device to print the desired image onto the side surface (22) of the ice-cream cone. The apparatus comprises a control unit (100) of the gripping means (10) and of the printing device (50).

## Description

The present invention relates to an apparatus for decorating ice-cream cones.

Printing apparatuses for edible material are known. Said printing apparatuses are adapted to print images on biscuits, wafers, etc. with food coloring. Normally, in food-processing companies, printing apparatuses are of the continuous type, i.e. are provided with a roller for continuously feeding the printing device with biscuits, wafers, etc.

The apparatuses known for printing images on biscuits, wafers, etc. allow printing only on flat surfaces.

In view of the described prior art, it is the object of the present invention to provide an apparatus for decorating ice-cream cones which is different from those known.

In accordance with the present invention, said object is achieved by means of an apparatus for decorating ice-cream cones as defined in claim 1.

The features and the advantages of the present invention will be apparent from the following detailed description of a practical embodiment thereof, illustrated by way of non-limiting example in the accompanying drawings, in which:
figures 1-7 show the successive steps of operating of an apparatus for printing images onto ice-cream cones according to the present invention;
figure 8 is a front view of the slide with the ice-cream cone separator of the apparatus in figure 1;
figure 9 is a view of the gripping means of the apparatus in figure 1;
figure 10 is a perspective view of the apparatus in figure 1 installed on a mobile support.

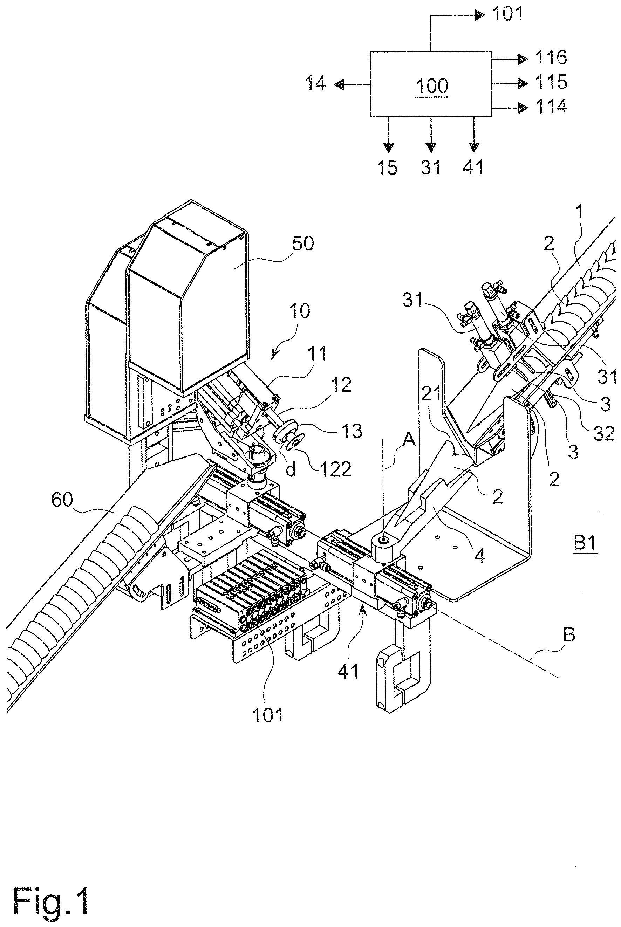

Figures 1-7 show an apparatus for decorating ice-cream cones according to the present invention.

The apparatus comprises a printing device 50 of images by means of food coloring and gripping means 10 adapted to grip a single ice-cream cone 2, to arrange it under the printing nozzles 51 of the printing device and to rotate it in synchrony with said printing device to print the desired image onto the side surface 22 of the ice-cream cone 2.

The apparatus preferably comprises a loading slide 1 of ice-cream cones 2 in which a plurality of ice-cream cones 2 is placed; the slide is tilted downwards by an angle α with respect to a vertical axis to allow the cones 2 arranged on top of one another to slide downwards.

The apparatus preferably also comprises a gondola 4 adapted to receive a single ice-cream cone 2 of the plurality of ice-cream cones arranged on the slide 1.

Two forks 3 are arranged on the slide 1 to keep the cones 2 on the slide 1 and to separate the last cone 2, i.e. the cone placed lowest in the slide 1, from the other cones to allow the sliding of the cone 2 itself towards the gondola 4. An movement device 31, preferably comprising a pneumatic actuator, is adapted to control the forks 3 appropriately to separate a single cone 2 from the plurality of cones 2 arranged on the slide 1. A pusher 32 is also provided to push the cone 2 towards the gondola 4.

The gondola 4 is adapted to receive and maintain an ice-cream cone 2. The gondola 4 is preferably provided with actuating means 41, preferably pneumatic, which allow the actuation of the gondola 4; in particular, the movement means 41 allows the gondola 4 to rotate around an axis A, preferably a vertical axis. Preferably, the gondola 4 is tilted by the same angle α of the slide 1 with respect to a vertical axis so as to be aligned with the slide 1 and so as to receive the cone 2 from the slide 1. The movement means 41 preferably allows also the translation of the gondola 4 along an axis B orthogonal to the axis A to allow an adjustment of the gondola 4 in its alignment with the slide 1 in case of ice-cream cones of different sizes.

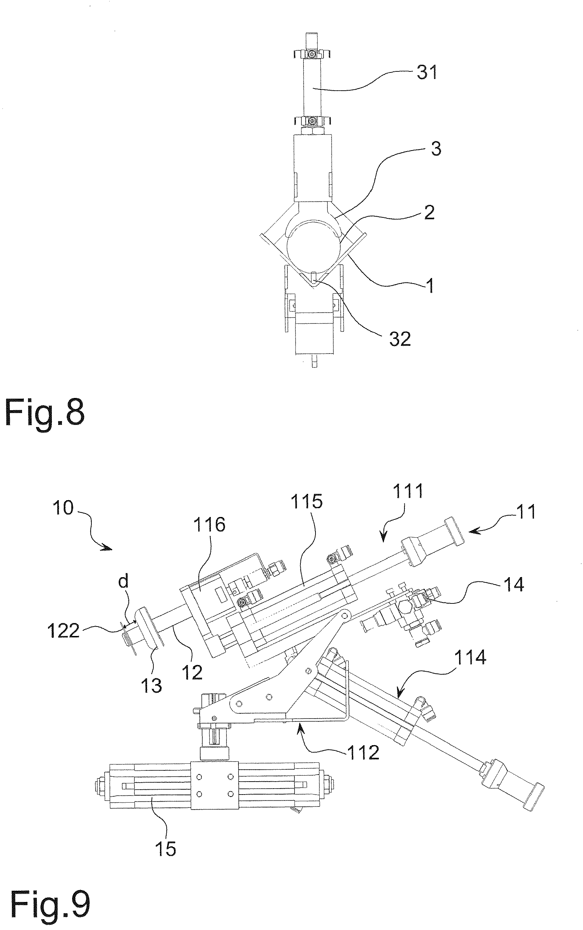

The gripping means 10 of a single ice-cream cone 2 comprise an arm 11, comprising a lower part 112 and an upper part 111 hinged together in rotational manner, as better shown in figures 1-7 and 9. The upper part 111 is provided with a hollow rod 12 which carries an element 13 provided with a membrane and shaped so as to be inserted into the aperture 21 of the cone 2 arranged in the gondola 4 for picking the cone 2. A disc 122 is also mounted on the hollow rod at a given distance d from element 13 to allow the sealing in the cone 2.

A device 14 is connected to arm 11 adapted to create a vacuum through the hollow rod 12 inside the cone 2; the device 14 is activated when the terminal 13 is inserted into the aperture 21 of the cone 2 so that the cone 2 can be gripped.

Also associated with the arm 11 is an movement device 114, preferably of the pneumatic type, which allows the rotation of the upper part 111 of the arm 11 with respect to its lower part 112, preferably about an axis Z orthogonal to the plane defined by the axes A and B, and an movement device 15, also of the pneumatic type, which allows the rotation of the arm 11 about a vertical axis. An actuation device 115 is provided, preferably of the pneumatic type, for the rod 12 which allows the translation of the rod 12 both for inserting the terminal 13 and the disc 122 into the aperture 21 of the cone 2 so as to grip the cone 2 and to retract the rod 12 so as to disengage the cone 2 from the gondola 4. Therefore, the movement device 115 allows the movement of the hollow rod 12 along the axis of the hollow rod 12; preferably the rod has a cylindrical shape.

The movement devices 15, 114 and 115 allow the arrangement of the cone 2, carried by the element 13 of the hollow rod 12, under the printing nozzles 51 of the printing device 50. In particular, the cone 2 is placed under the printing nozzles 51 so that the part of the side surface 22 of the cone 2, which is placed under the printing nozzles 51 of the printing device 50, is basically parallel to the printing nozzles 51.

Another movement device 116 is provided, which allows the rotation of the rod 12 and of the cone 2 about the axis of the rod 12 under the printing nozzles 51 for decorating the side surface 22 of the cone 2 with images. In particular, the gripping means 10 comprise the supporting rod 12 of the single ice-cream cone and the movement device 116 of the rod. When rotating around the axis of the hollow rod 12, the movement device 15 keeps the part of the side surface 22 of the ice-cream cone 2 which must be printed parallel to the printing nozzles 51 during the printing of said desired image.

The apparatus further comprises a slide 60 where the cones 2 already decorated are arranged.

A control unit 100 comprising a memory containing an executing software and a microprocessor, controls the operation of the various devices 31, 41, 15, 114, 115, 116, 14 and of the printing device 50. Preferably, the movement devices 41 and 15 are pneumatic devices and comprise a rotating cylinder and the devices 115, 114, 31 are pneumatic devices and comprise a pneumatic piston moving axially on a cylinder; preferably, all the movement devices 31, 41, 15, 114, 115, are controlled by valve means 101, in turn, controlled by the control unit 100, e.g. a PLC.

The operation of the apparatus is as follows:
A user loads a plurality of cones 2 onto slide 1; the forks 3 prevent the descent of the cones from slide 1.

In a first step, the control unit 100 controls the movement device 31 to raise one of the forks 3, the fork 3 arranged lowest and closest to the gondola 4, keeping the other fork lowered; this allows the separation of a cone 2 from the plurality of cones 2 present on the slide 1 (figure 1). The pusher 32 pushes the cone 2 to separate from the adjacent cone 2. The gondola 4 is arranged so as to be aligned with the slide 1 to receive the cone 2 separated by the plurality of cones 2 present on the slide 1.

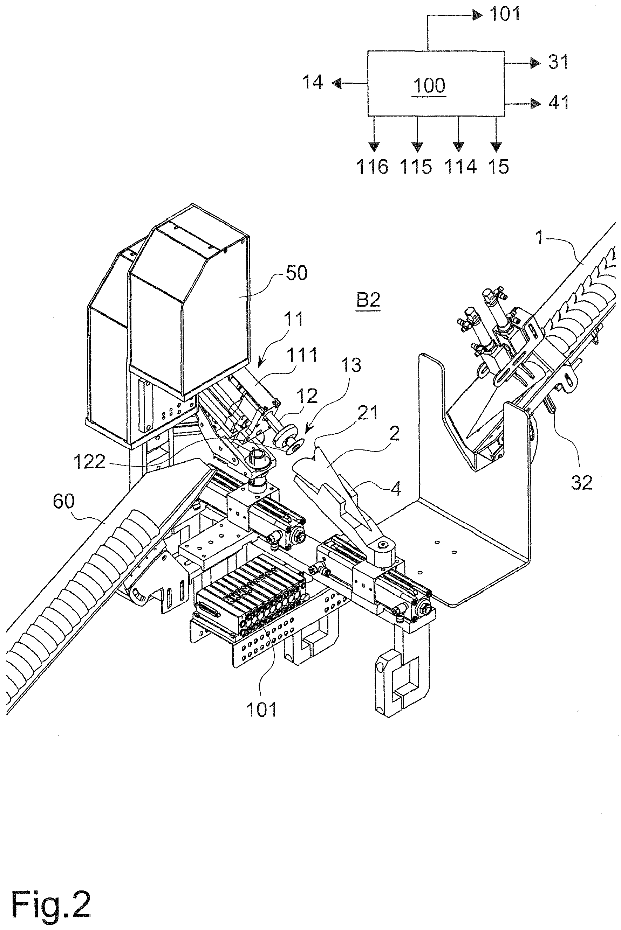

In a second step, the control unit 100 controls the movement device 41 to rotate the gondola 4 about the axis A, making a rotation of about 90° so that the gondola 4 moves from a position B1 of gripping of the cone 2 to a position B2 of waiting of the gripping means 10 adapted to grip the cone 2 for decorating it (figure 2).

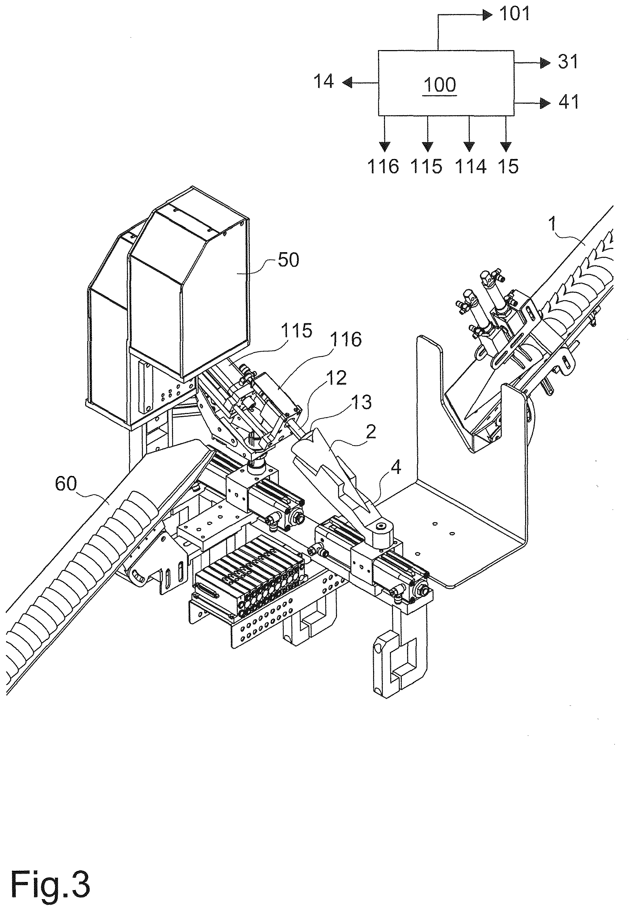

In a third step, the control unit 100 controls the movement device 115 for the translation of the rod 12 for the insertion of the element 13 and the disc 122 inside the aperture 21 of the cone 2 carried by the gondola 4 (figure 3). The vacuum is thus created inside the cone 2 by extracting the air present in the cone through the hollow rod 12 and by means of the device 14; the disc 122, carried by the rod 12 and arranged at an appropriate distance d from the terminal 13 so as to close the aperture 21 of the cone 2, ensures the seal.

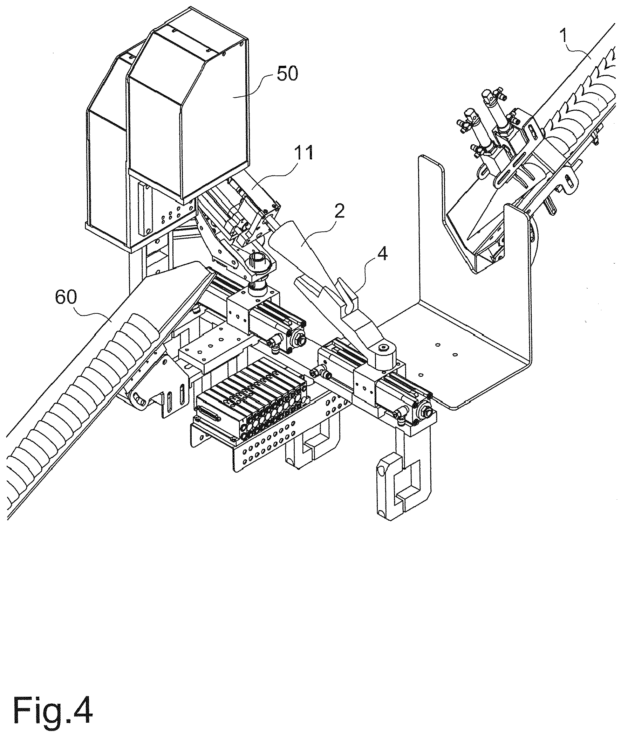

In a fourth step, the control unit 100 controls the movement device 115 and translates the rod 12 to extract the cone 2 from the gondola 4 (figure 4).

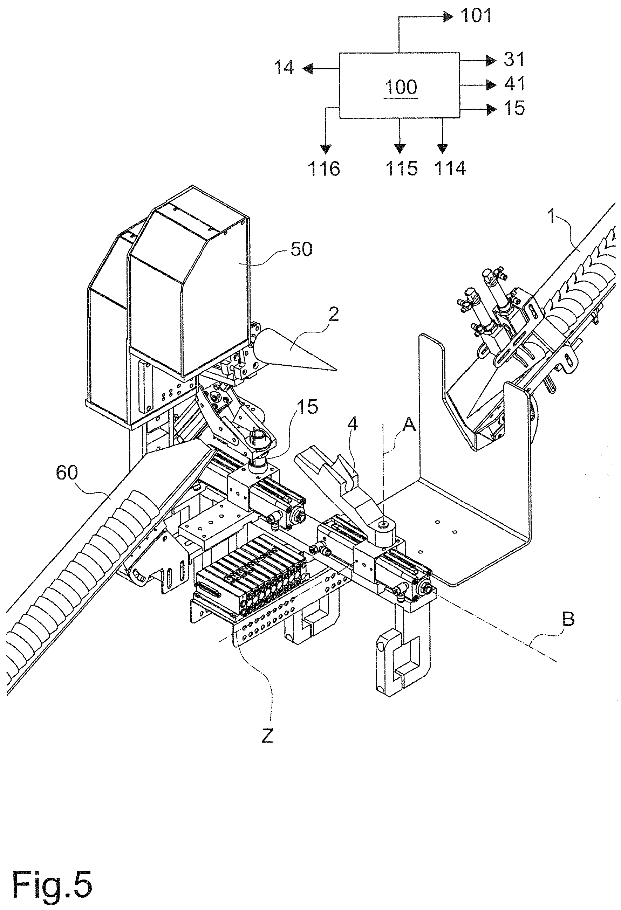

In a fifth step, the control unit 100 controls the devices 114 and 15 to take the cone 2, extracted from the gondola 4, under the printing nozzles 51 of the printing device 50. Preferably, the movement device 114 allows a rotation of the upper part 111 of the arm 11 about an axis Z orthogonal to the plane on which the axes A and B lie (figure 5) to allow a tilting of the upper part 111 of the arm 11 and of the rod 12 by an angle such that the part of the side surface 22 of the cone 2, which is adjacent to but separated from the printing nozzles 51 of the printing device 50 and onto which the initial part of the image is to be printed, is substantially parallel to the printing nozzles 51. Said tilting depends on the dimensions of the cone 2; in particular, said tilting with respect to the axis Z must compensate for the angular aperture of the cone 2.

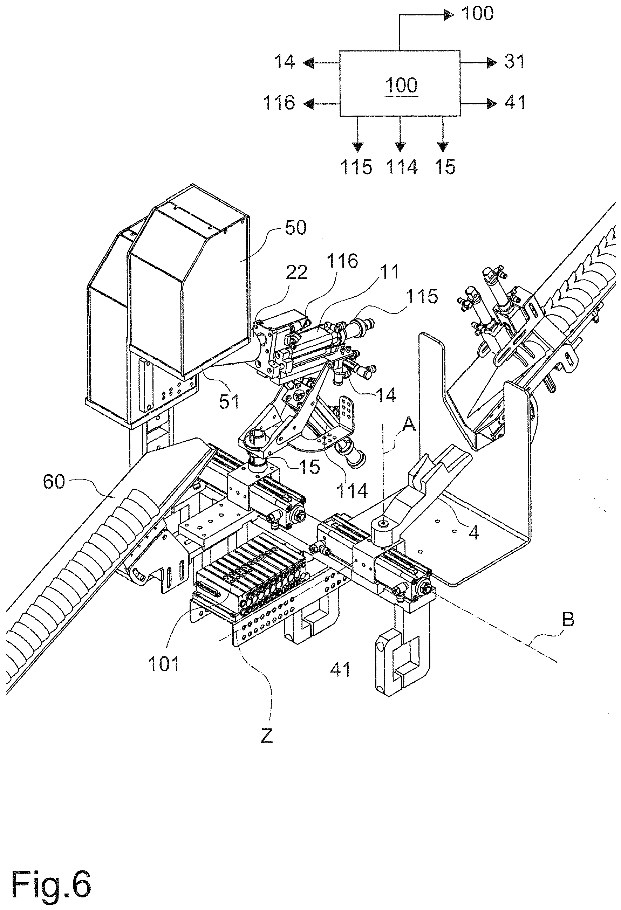

The control unit 100 thus controls the actuation device 15 for rotation about an axis parallel to the axis A (figure 6) of the entire arm 11 so that the ice-cream cone 2 is arranged under the printing nozzles 51 of the printing device 50.

The control unit 100 controls the movement device 116 to rotate the rod 12 about its axis in synchrony with the printing operation of the printing device 50 to decorate the side surface 22 of the cone 2 with the desired image. The gripping means 10 and the printing device 50 are configured to keep the part of the side surface 22 of the ice-cream cone which must be printed parallel to the printing nozzles during the rotation of said ice-cream cone.

Therefore, in a sixth step, the control unit 100 controls the actuation device 116 to rotate the rod 12 about its axis, an axis parallel to the axis Z, in synchrony with the printing operation of the printing device 50 to decorate the side surface 22 of the cone 2 with the desired image (figure 6). During the rotation of the ice-cream cone 2, the part of said side surface 22 of the ice-cream cone 2 to be printed is kept parallel to said printing nozzles 51 during the printing of said desired image.

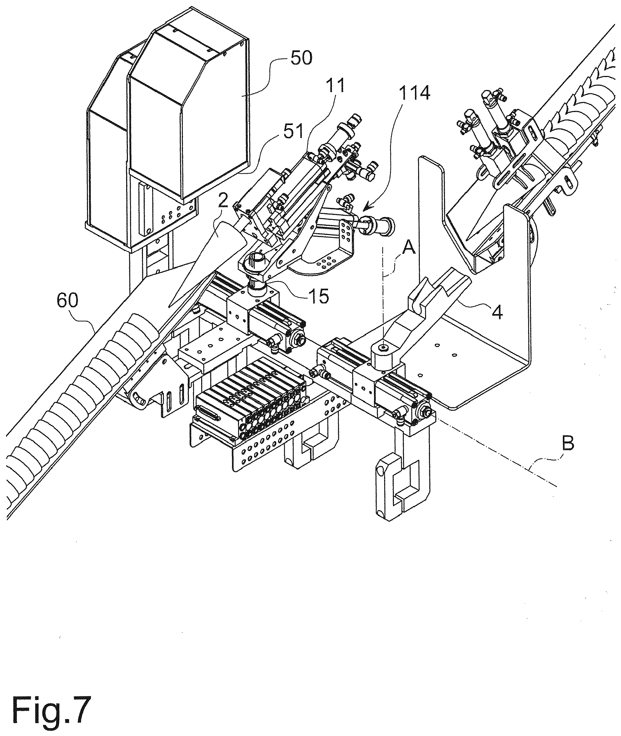

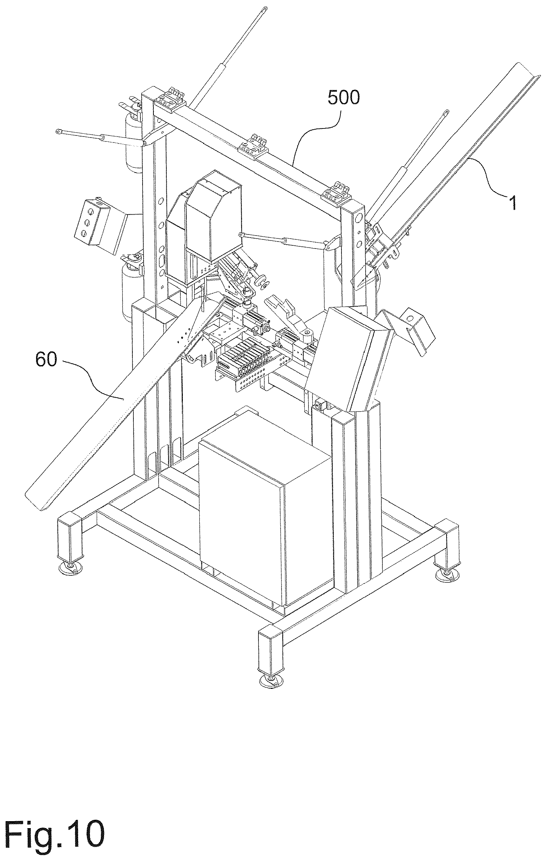

In a seventh step, the control unit 100 controls the actuation device 15 to rotate the upper part 111 of the arm 11 about an axis parallel to the axis B to take the cone 2 near a slide 60 (figure 7); the successive introduction of air into the cone 2 causes the loss of seal and the consequent falling of the decorated cone 2 onto the slide 60.
A supporting unit 500 is provided for the entire apparatus according to the invention which allows the easy transport of the apparatus inside a factory or a room, as shown in figure 10. Preferably the support is of the H-type.

## Claims

1. An apparatus for decorating ice-cream cones (2), said apparatus comprising a printing device (50) of images by means of food coloring, **characterized in that** it comprises gripping means (10) adapted to grip a single ice-cream cone, to arrange it under the printing nozzles (51) of said printing device and to rotate it so that the rotation of the single ice-cream cone is synchronized with the printing operation of said printing device to print the desired image onto the side surface (22) of the ice-cream cone, said gripping means (10) being configured to keep the part of said side surface (22) of the ice-cream cone to be printed parallel to said printing nozzles during the rotation of said ice-cream cone, said gripping means comprising a supporting rod (12) of the single ice-cream cone and an movement device (116) of said rod, said apparatus comprising a control unit (100) of said gripping means (10) and of said printing device (50), which comprise a memory containing an executing software and a microprocessor, said control unit (100) controlling said movement device (116) to rotate said rod (12) about its axis in synchrony with the printing operation of the printing device (50) to decorate the side surface (22) of the cone (2) with the desired image.

2. An apparatus according to claim 1, **characterized in that** said gripping means (10) comprise an arm (11) including an upper part (111) and a lower part (112) which are hinged to rotate each with respect to one another, said upper part (111) being provided with said rod (12), provided in turn with a supporting element (13) of the ice-cream cone (2).

3. An apparatus according to claim 2, **characterized in that** said rod (12) is hollow inside, said hollow rod being connected to a suction device (14) to form the vacuum inside the ice-cream cone so as to keep it in place on said supporting element (13).

4. An apparatus according to claim 3, **characterized in that** said hollow rod carries a disc element (122) which can be inserted in the aperture (21) of the ice-cream cone to ensure the seal after the vacuum has been formed inside the ice-cream cone.

5. An apparatus according to claim 2, **characterized in that** it comprises movement means (114) configured to rotate the upper part (111) of the arm (11) with respect to the lower part (112) and rotating means (116) configured for rotating said rod (12).

6. An apparatus according to claim 2, **characterized in that** it comprises movement means (15) configured to rotate the entire arm about a vertical axis (A).

7. An apparatus according to claim 1, **characterized in that** it comprises a slide (1) containing a plurality of ice-cream cones and separation means (3) configured to separate a single ice-cream cone from said plurality of ice-cream cones, said separation means being controlled by said control unit (100).

8. An apparatus according to claim 7, **characterized in that** it comprises a gondola means (4) adapted to receive from the slide said single ice-cream cone which has been separated from said plurality of ice-cream cones and actuation means (41) configured to rotate the gondola meanse about a vertical axis (A) and controlled by said control unit (100).

9. An apparatus according to claims 8 and 2, **characterized in that** it comprises further actuation means (115) of said rod (12) for translating the rod along its axis.

10. An apparatus according to claims 9 and 4, **characterized in that** said further actuation means (115) of said rod (12) are configured to insert said supporting element (13) and said disc element (122) into the aperture of the ice-cream cone carried by the gondola means for the successive gripping of said ice-cream cone by said gondola means, said further movement means (115) of said rod (12) being configured to disengage said supporting element (13) and said disc element (122) from the aperture of the already decorated ice-cream cone to release said decorated ice-cream cone.
